**Europäisches Patentamt**

**European Patent Office**

**Office européen des brevets**

(19)

(11) Veröffentlichungsnummer: **0 082 298**
**B1**

(12) **EUROPÄISCHE PATENTSCHRIFT**

(45) Veröffentlichungstag der Patentschrift:
**11.09.85**

(51) Int. Cl.⁴: **B 60 S 1/04,** B 60 S 1/18

(21) Anmeldenummer: **82110457.7**

(22) Anmeldetag: **12.11.82**

(54) **Wischvorrichtung für Scheiben von Kraftfahrzeugen.**

(30) Priorität: **20.11.81 DE 3146022**
**18.08.82 DE 3230695**

(43) Veröffentlichungstag der Anmeldung:
**29.06.83 Patentblatt 83/26**

(45) Bekanntmachung des Hinweises auf die Patenterteilung:
**11.09.85 Patentblatt 85/37**

(84) Benannte Vertragsstaaten:
**BE DE FR GB IT SE**

(56) Entgegenhaltungen:
**DE - A - 1 655 123**
**DE - B - 2 506 944**

(73) Patentinhaber: **ROBERT BOSCH GMBH, Postfach 50,**
**D-7000 Stuttgart 1 (DE)**

(72) Erfinder: **Schmidt, Lothar, Am Bierkeller 9a,**
**D-7580 Bühl-Altschweier (DE)**
Erfinder: **Seibicke, Horst, Am Bierkeller 18,**
**D-7580 Bühl-Altschweier (DE)**
Erfinder: **Ursel, Eckhard, Lessingstrasse 21, D-7580 Bühl**
**(DE)**

## Beschreibung

Die Erfindung geht aus von einer Wischvorrichtung nach der Gattung des Hauptanspruchs. Es ist schon eine solche Wischvorrichtung bekannt (DE-A-1 655 123), bei der die Sperreinrichtung einen am Gehäuse der Antriebsvorrichtung verschiebbar geführten Schaltstift und eine mit diesem Schaltstift zusammenarbeitende Anschlagschulter gebildet ist, welche an einem Schaltrad angeordnet ist. Das Schaltrad selbst ist über eine federnde Kupplung mit einem zur Antriebsvorrichtung gehörenden Schneckenrad verbunden. Damit der Schaltstift im Bedarfsfall in die Bewegungsebene der Anschlagschulter gelangt, ist dieser durch die Federkraft eines am Gehäuse befestigten, entsprechend vorgespannten Pendelkontakts beaufschlagt. Eine derartige Ausbildung einer Sperrvorrichtung bringt Schwierigkeiten bei der Herstellung und bei der Montage mit sich, weil eine Vielzahl von einzelnen Bauelementen in einer ganz bestimmten Reihenfolge montiert werden müssen. Damit die Funktion der bekannten Wischvorrichtung gewährleistet ist, kann das Schaltrad mit der Anschlagschulter — bezüglich der Lage des Schaltstifts — nur in einer ganz bestimmten Stellung eingebaut werden, was die Montage der Antriebsvorrichtung weiter erschwert. Damit die vom Pendelkontakt ausgeübte, relativ geringe Federkraft den Schaltstift zu verschieben vermag, soll der Schaltstift schließlich leichtgängig geführt sein. Andererseits soll er aber das von der Anschlagschulter übertragene Drehmoment von der Schaltscheibe abfangen, was eine stabile Lagerung des Schaltstifts erfordert. Beide Forderungen an die Lagerung des Schaltstifts sind kaum miteinander zu vereinbaren.

### Vorteile der Erfindung

Die erfindungsgemäße Wischvorrichtung mit den kennzeichnenden Merkmalen des Hauptanspruchs hat demgegenüber den Vorteil, daß sie besonders einfach aufgebaut und kostengünstig montierbar ist, weil die Sperrvorrichtung in ein ohnehin vorhandenes Bauelement — zum Lagern eines drehbaren Bauteils in einen Durchbruch des Gehäuses der Wischvorrichtung — integriert ist. Durch die in den Unteransprüchen aufgeführten Maßnahmen sind vorteilhafte Weiterbildungen und Verbesserungen der im Hauptanspruch angegebenen Wischvorrichtung möglich. Besonders vorteilhaft ist es bei einer Wischvorrichtung, deren Antriebsvorrichtung ein Untersetzungsgetriebe aufweist, wenn das drehbar gelagerte Bauteil mit einem Getrieberad zusammenarbeitet, welches mit dem Pendelgetriebe wirkverbunden ist.

### Zeichnung

Ein Ausführungsbeispiel der Erfindung ist in der Zeichnung dargestellt und in der nachfolgenden Beschreibung näher erläutert. Es zeigt

Fig. 1 eine Draufsicht auf die zwischen der Antriebsvorrichtung und dem Pendelgetriebe angeordneten Bauelemente in einer Betriebsstellung, die den normalen Wischbetrieb zuläßt,

Fig. 2 eine Draufsicht auf die Bauelemente gemäß Fig. 1 in einer Betriebsstellung, wie sie gegeben ist, wenn der Wischer außerhalb des Wischfeldes abgelegt ist,

Fig. 3 einen Teilschnitt durch die Bauelemente gemäß Fig. 1, entlang der Linie III-III,

Fig. 4 einen Teilschnitt durch die Bauelemente gemäß Fig. 1, entlang der Linie IV-IV,

Fig. 5 die Antriebsvorrichtung entlang der Linie V-V in Fig. 1 geschnitten,

Fig. 6 ein Freilauflager in perspektifischer Darstellung,

Fig. 7 einen Schnitt durch eine andere aufgebaute Antriebsvorrichtung, die sich in einer Betriebsstellung befindet, in welcher ein zur Wischvorrichtung gehörender Scheibenwischer ein kreissegmentförmiges Wischfeld überstreicht,

Fig. 8 eine Teildraufsicht auf die Antriebsvorrichtung gemäß Fig. 7 mit unmaßstäblich einskizziertem Pendelgetriebe sowie dem Scheibenwischer,

Fig. 9 einen Schnitt entlang der Linie IX-IX in Fig. 7,

Fig. 10 einen Schnitt durch die Antriebsvorrichtung gemäß Fig. 7, die sich jedoch in der Parkstellungs-Betriebsstellung befindet,

Fig. 11 eine Teildraufsicht auf die Antriebsvorrichtung gemäß Fig. 10, mit unmaßstäblich einskizziertem Pendelgetriebe sowie dem Scheibenwischer,

Fig. 12 einen Schnitt entlang der Linie XII-XII in Fig. 10,

Fig. 13 die sich ergebende Schnittfläche, bei einem Schnitt entlang der Linie XIII-XIII in Fig. 12,

Fig. 14 eine Draufsicht auf einen das Angriffselement für das Pendelgetriebe aufweisenden Zylinder einer weiteren Ausführung in der in Fig. 8 gezeigten Betriebsstellung,

Fig. 15 den Zylinder gemäß Fig. 14 in einer Betriebsstellung gemäß Fig. 11 und

Fig. 16 eine Teilansicht des Zylinders mit aufgebrachtem, schaltbarem Freilauflager, im Bereich des Schalthebels geschnitten.

### Beschreibung des Ausführungsbeispiels

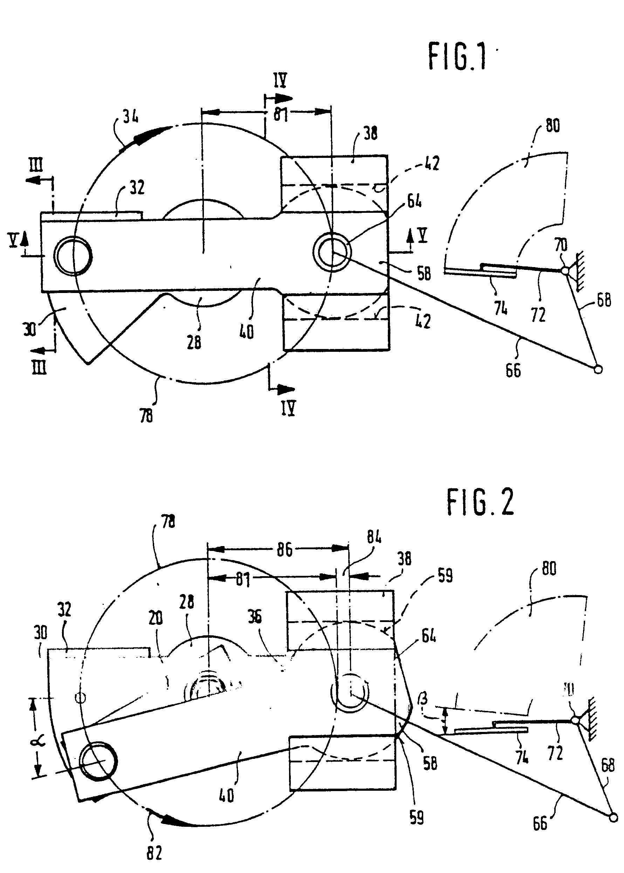

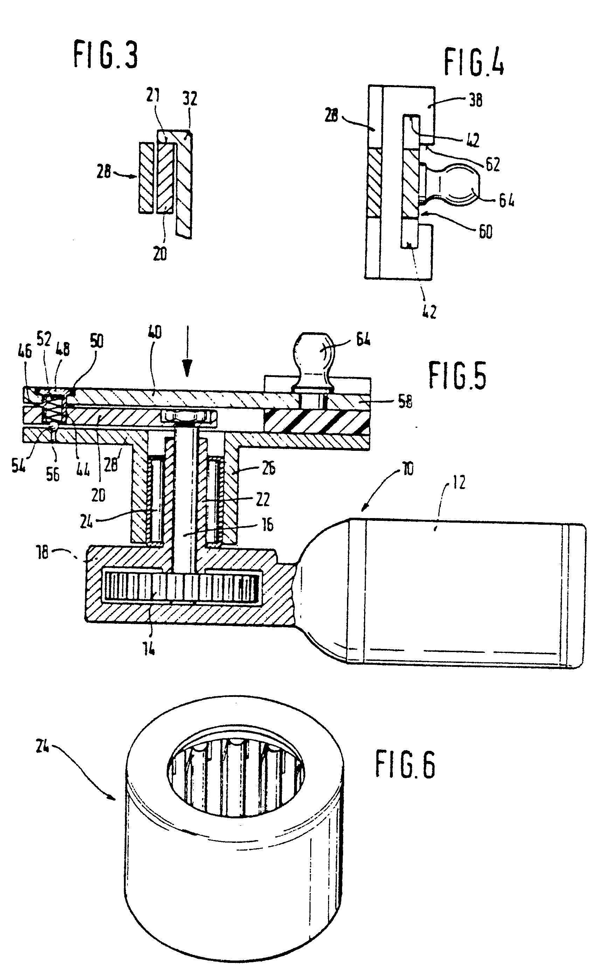

Eine in Fig. 5 dargestellte Antriebsvorrichtung 10 gehört zu einer Wischvorrichtung für Scheiben von Kraftfahrzeugen, wie sie in den Fig. 1 und 2 vom Prinzip her dargestellt ist. Die Antriebsvorrichtung 10 weist einen Elektromotor 12 auf, der in beiden Drehrichtungen zu betreiben ist. Die nicht dargestellte Abtriebswelle des Elektromotors 12 ist als Schneckenwelle ausgebildet, die mit einem Schneckenrad 14 zusammenarbeitet. Das Schneckenrad 14 ist mit einer Abtriebswelle 16 verbunden, die ein das Schnekkengetriebe umgebendes Getriebegehäuse 18 durchdringt. An dem freien Ende der Abtriebswelle ist eine Kurbel 20 mit ihrem einen Ende befestigt. Die Abtriebswelle 16 ist in einer langgestreckten Nabe 22 geführt, die fest bzw. einstückig mit dem Getriebegehäuse 18 verbunden ist. Auf der Nabe 22 ist ein in Fig. 6 für sich dargestelltes Freilauflager 24 angeordnet. Bei dem Freilauflager 24 handelt es sich um ein Bauelement, das als fertiges Maschinenelement auf dem Markt angeboten wird und dessen Funktion allgemein bekannt ist. Das Freilauflager 24 ist von einer Hülse 26 umgeben, die fest bzw. einstückig mit einem Bauteil 28 verbunden ist. Aus den Fig. 1 bis 3 ist zu entnehmen, daß das Bauteil 28 langgestreckt ausgebildet ist. In dessen Mittelbereich sitzt die Hülse 26. Das eine Ende 30 des Bauteils 28 ist mit einem Lappen 32 versehen, der rechtwinklig hochgestellt ist und sich bis in den Bereich der Kurbel 20 erstreckt. Der Lappen 32 bildet einen Mitnehmer, an dem die Kurbel 20 anschlägt, wenn sie in Uhrzeigersinn (Pfeil 34) bewegt wird. An dem anderen Ende 36 des Bauteils 28 ist ein Kunststoffblock 38 befestigt. Nahe dem freien Ende der Kurbel 20 ist ein Arm 40 angelenkt der ebenfalls langgestreckt ausgebildet ist und dessen freies Ende in einer im Block 38 ausgebildeten Führung 42 geführt wird. Die Gelenkverbindung zwischen der Kurbel 20 und dem Arm 40 wird durch einen rohrförmigen Bolzen 44 bewirkt, dessen eines Ende in eine in der Kurbel 20 angeordneten Bohrung eingepreßt ist. Das andere Ende des Bolzens 44 ist in einer Bohrung des Arms 40 drehbar gelagert. Weiter weist der Bolzen 44 in seinen Mittelbereich eine Ringbund 46 auf, der die Kurbel 20 und den Arm 40 mit Abstand voneinander hält. Damit der Arm 40 in axialer Richtung des Bolzens 44 an diesem gesichert ist, weist der Bolzen 44 eine Kappe 48 auf, die in einer Senkung 50 des Armes 40 liegt. In der als Sackbohrung ausgebildeten Ausnehmung des rohrförmigen Bolzens 44 ist eine Druckfeder 52 vorgespannt angeordnet, die eine Rastkugel 54, in der in Fig. 1 dargestellten Betriebsstellung, in eine dieser zugeordneten Rastausnehmung 56 drückt. Die Rastausnehmung 56 ist durch eine Bohrung in dem Bauteil 28 gebildet. Das in dem Block 38 geführte Ende 58 des Armes 40 ist kreisförmig ausgebildet. Der Durchmesser der einander gegenüberliegenden Seiten dieses Endes 58 ist größer als die restliche Breite des Armes 40. Diese kopfartige Verbreitung an dem Ende 58 liegt passend in einer als Schiebeführung 42 ausgebildeten Ausnehmung 60 (Fig. 4). Durch die kreisförmige Ausbildung der Kopfränder 59 ist der Arm 40 in der Führung 42 verschiebbar und gleichzeitig schwenkbar gelagert. Die Ausnehmung 60 ist im Querschnitt T-förmig ausgebildet. Sie weist demnach in ihrem Mittelbereich einen Durchbruch 62 auf, der von einem als Kugelzapfen ausgebildeten Angriffselement 64 durchsetzt ist, der mit dem kopfartig ausgebildeten Ende 58 des Armes 40 fest verbunden ist. An dem Kugelzapfen 64 greift eine zu einem Pendelgetriebe der Wischvorrichtung gehörende Schubstange 66 an (Fig. 1 und 2) an deren anderem Ende eine Schwinge 68 angelenkt ist, die mit einer Wischerwelle 70 fest verbunden ist. Die Wischerwelle 70 ist in der Karosserie des Kraftfahrzeuges gestellfest gelagert. Weiter ist an der Wischerwelle 70 ein Wischerarm 72 befestigt, an dessen freien Ende ein Wischblatt 74 angelenkt ist. Der Wischerarm 72 und das Wischblatt 74 bilden zusammen einen Wischer der Wischvorrichtung.

Im Betrieb der Wischvorrichtung treibt der Elektromotor die Abtriebswelle 16 derart an, daß sich die Kurbel 20 in Richtung des Pfeiles 34 in Fig. 1, also im Uhrzeigersinn, dreht. Das Freilauflager 24 ist so eingebaut, daß sich das Bauteil 28 ebenfalls in dieser Richtung drehen kann, wenn die eine in Umlaufrichtung Pfeil 34 vornliegende Fläche 21 der Kurbel 20 an dem Mitnehmer 32 des Bauteils 28 anschlägt. Nachdem das Bauteil 28 durch die Kurbel 20 in Pfeilrichtung 34 mitgenommen wird und der Arm 40 einmal durch den Gelenkbolzen 44 mit der Kurbel 20 und zum anderen am kopfförmigen Ende 58 im Block 38 mitgenommen wird, dreht sich der Arm 40 ebenfalls in Richtung des Pfeils 34. Es läuft also das gesamte System, bestehend aus der Abtriebswelle 16, der Kurbel 20, dem Bauteil 28, dessen Hülse 26 und dem Arm 40 in Richtung des Pfeiles 34. Dabei läuft der Kugelzapfen 64 auf einem Flugkreis 78 um, der einen Radius 81 hat. Die Umlaufbewegung des Kugelzapfens 64 wird über das Pendelgetriebe 66, 68 auf die Wischerwelle 70 übertragen, so daß das Wischblatt 74 auf der nicht dargestellten, zu wischenden Scheibe, ein kreissegmentförmiges Wischfeld 80 überstreicht. Wenn nun die Wischvorrichtung abgestellt wird, soll der Wischer 72, 74 in eine außerhalb des Wischfelds 80 liegende Ablagestellung überführt werden. Nach dem Stillsetzen des Elektromotors 12 wird durch eine bekannte, schaltungstechnische Maßnahme die Drehrichtung des Motors umgekehrt, so daß die Kurbel entgegen dem Uhrzeigersinn (Pfeil 82 in F i g. 2) dreht. In dieser Drehrichtung entfernt sich die Fläche 21 der Kurbel 20 von dem Mitnehmer 32 des Bauteils 28. Diese beiden Bauelemente werden also entkoppelt. Dabei verhindert das Freilauflager 24 eine Mitnahme des Bauteils 28 durch Reibung, da das Freilauflager 24 diese Drehrichtung für die Hülse 26 und damit für das Bauteil 28 sperrt. Damit bleibt also auch der Block 38 und damit die Führungsmittel 42 arretiert. Wenn nun die Kurbel 20 bei einem bestimmten Winkel — in vorliegendem Fall sind dies etwa 15° — entgegen Uhrzeigersinn (Pfeil 82) geschwenkt worden ist, hat sich das kopfförmige Ende 58 des Armes 40 um das Maß 84 von dem Flugkreis 81 entfernt. Diese Verschiebung erfolgt, auf die Drehachse der Abtriebswelle 16 bezogen, radial. Das Maß 84 ist abhängig von der Größe des Winkels $\alpha$, der die Rückschwenkbewegung der Kurbel 20 angibt. Durch die Verschiebung des Kurbelzapfens 64 um das Maß 84 beträgt sein Abstand von der Drehachse der Abtriebswelle 16 nun ein Maß, das den Abstand 86 (Fig. 2) entspricht. Diese Verschiebebewegung des Kugelzapfens 64 wird über die Schubstange 66 und die Schwinge 68 auf die Wischerwelle 70 übertragen, die eine zusätzliche Schwenkbewegung in der Größe des Winkels $\beta$ (Fig. 2) ausführt. Diese zusätzliche Schwenkbewegung zwingt den Wischer 72, 74 in eine in Fig. 2 dargestellte Ablagestellung, die sich außerhalb des Wischfeldes 80 befindet.

Die Verschiebebewegung des Kugelzapfens 64 wird also dadurch erreicht, daß die während des Wischbetriebs festgehaltenen Führungsmittel 60 über den Kugelzapfen 64 in der Drehrichtungsumkehrstellung festgehalten werden. Die Rücklaufbewegung der Kurbel 20 wird dadurch im Betrieb der Führungsmittel 42 in eine lineare Verschiebebewegung umgewandelt, durch welche der Abstand des Kugelzapfens 64 von der Umlaufachse der Antriebswelle 16 um das Maß 84 vergrößert wird. Dabei wird die Sicherung der Führungsmittel in besonders zweckmäßiger Weise durch das Freilauflager 24 übernommen.

Die Verrastung 54, 56 zwischen dem Bauteil 28 und der Kurbel 20 verhindert, daß während des Wischbetriebs, wenn in den Umkehrlagen des Wischers das Pendelgetriebe 66, 68 und alle diesem nachgeordneten Elemente 70, 72, 74 für einen Moment bewegungslos verharren und sich auch der Kugelzapfen 64 in einer »Totlage« befindet, sich das Bauteil 28, bzw. dessen Mitnehmer — wegen der bewegten Massen — sich von der Kurbel 20 entfernt und eine Situation gemäß Fig. 2 hergestellt wird. Dadurch würde nämlich in der von der Ablagestellung des Wischers 72, 74 entfernten Umkehrstellung, das Wischblatt 74 über den Scheibenrand hinausfahren.

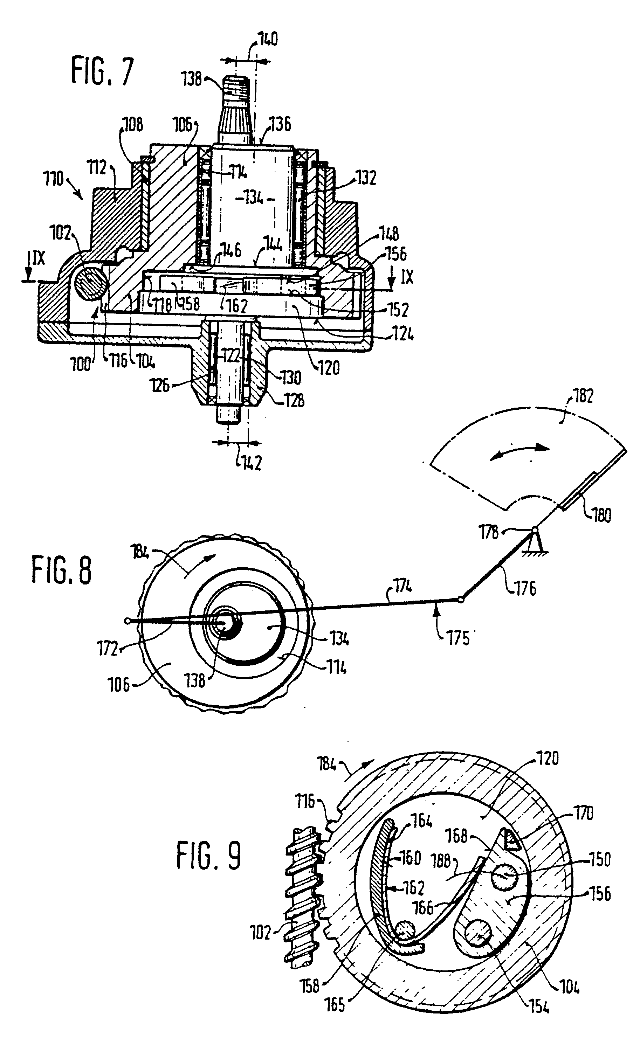

Bei einem anderen Ausführungsbeispiel der Erfindung ist dem nicht dargestellten, elektrischen Antriebsmotor ein als Schneckengetriebe ausgebildetes Untersetzungsgetriebe 100 nachgeordnet, dessen Schneckenwelle 102 durch eine Verlängerung der Motor-Ankerwelle gebildet ist. Die Schneckenwelle 102 kämmt mit einem Schneckenrad 104, das einen rohrförmigen Ansatz 106 aufweist. Die Mantelfläche des rohrförmigen Ansatzes 106 ist in einer Lagerung 108 geführt, die in einem zur Antriebsvorrichtung 110 gehörenden Gehäuse 112 angeordnet ist. Der rohrförmige Ansatz 106 des Schneckenrades 104 ist mit einer in Richtung der Schneckenrad-Drehachse verlaufenden Lagerbohrung 114 versehen, die jedoch exzentrisch zu der in der Lagerung 108 geführten Mantelfläche des rohrförmigen Ansatzes 106 angeordnet ist. Auf der von dem rohrförmigen Ansatz 106 abgewandten Stirnfläche des Schneckenrades 104 weist dieses eine zu seiner Verzahnung 116 konzentrische Vertiefung 118 auf, in der ein scheibenförmiges Bauteil 120 angeordnet ist. Das scheibenförmige Bauteil 120 ist mit einem zentrischen Lagerzapfen 122 ausgestattet, welcher sich an der aus der Vertiefung 118 weisenden Stirnfläche 124 des scheibenförmigen Bauteils 120 befindet. Der Lagerzapfen 122 ist in einer Führungsbohrung 126 eines zum Gehäuse 112 gehörenden Gehäuseteils 128 geführt (Fig. 7). Die Führungsbohrung 126 ist konzentrisch zur Lagerung 108 des Schneckenrades 104 angeordnet. Zwischen der Führungsbohrung 126 im Gehäuseteil 128 und dem Lagerzapfen 122 des scheibenförmigen Bauteils 120 befindet sich ein erstes Freilauflager 130, das in der Führungsbohrung 126 geführt ist und den Lagerzapfen 122 aufnimmt. In der in die Vertiefung 118 einmündenden Lagerbohrung 114 des rohrförmigen Ansatzes 106 ist ein zweites Freilauflager 132 angeordnet, das einen Zylinder 134 aufnimmt. Der Zylinder 134 ist an seiner von dem scheibenförmigen Bauteil 120 abgewandten Stirnfläche 136 mit einem als Gewindebolzen 138 ausgebildeten Ansatz versehen, der exzentrisch zur Achse des Zylinders 134 sitzt. Die Exzentrizität 140 des Gewindebolzens 138 in bezug auf die Achse des Zylinders 134 entspricht der Exzentrizität 142 der Lagerbohrung 114 für den Zylinder 134 in dem rohrförmigen Ansatz 106. Wie sich aus vorstehendem ergibt, haben die beiden Freilauflager 130 und 132 zueinander parallele Drehachsen. Die beiden Freilauflager sind jedoch so eingebaut, daß sie in einander gegengesetzten Richtungen frei drehbar sind. Der Zylinder 134 hat an seinem von dem Gewindebolzen 138 abgewandten Ende eine Ringschulter 144, der eine Gegenschulter 146 des rohrförmigen Ansatzes 106 zugeordnet ist. Die Ringschulter 144 des Zylinders 134 verhindert somit im Zusammenwirken mit der Gegenschulter 146 ein Herauswandern des Zylinders aus der Lagerbohrung 114 bzw. aus dem Freilauflager 132.

Der Zylinder 134 ist an seiner, dem scheibenförmigen Bauteil 120 zugewandten Stirnfläche 148 mit einem Lagerbolzen 150 versehen. Ebenso ist an der dem Zylinder 134 zugewandten Fläche 152 des scheibenförmigen Bauteils 120 ein Lagerbolzen 154 angeordnet. Die beiden Lagerbolzen 150 und 154 haben zueinander parallele Achsen und sitzen, in bezug auf die Drehachsen ihrer Träger (Zylinder 134 bzw. scheibenförmiges Bauteil 120) — exzentrisch. Die beiden Lagerbolzen 150 und 154 bilden Gelenkstellen für einen Führungshebel 156, der sich zwischen der Stirnfläche 148 des Zylinders 134 und der Fläche 152 des scheibenförmigen Bauteils 120 befindet.

Weiter weist das scheibenförmige Bauteil 120 an seiner Fläche 152 einen im wesentlichen L-förmigen Vorsprung 158 auf, der eine Stützschulter 160 für eine aus Federbandstahl hergestellte Schenkelfeder 162 hat. Der eine Schenkel 164 der Schenkelfeder 162 liegt an der Stützschulter 160 an, während der andere Schenkel 166 vorgespannt an einer der Stützschulter 160 zugewandten Flanke 168 des Führungshebels 156 anliegt. Die Schenkelfeder 162 ist an der Stützschulter 160 durch ein Sicherungsbolzen 165 in ihrer vorschriftsmäßigen Lage gehalten.

Zur Vereinfachung der Montage des Führungshebels 156 und der Schenkelfeder 162 ist an der Fläche 152 des scheibenförmigen Bauteils 120 ein Nocken 170 angeordnet, der eine Sicherung des federbelasteten Führungshebels 156 in seiner vorbeschriebenen Montagestellung gewährleistet. Wie Fig. 8 zeigt, ist an dem Gewindebolzen 138 eine Kurbel 172 befestigt, an deren freien Ende das eine Ende einer Schubstange 174 angelenkt ist. Das andere Ende der Schubstange 174 ist mit dem freien Ende einer Schwinge 176 gelenkig verbunden, die an einer gestellfest gelagerten Wischerwelle 178 befestigt ist. An der Wischerwelle 178 ist ein Scheibenwischer 180 angeordnet, der im Betrieb der Wischvorrichtung ein kreissegmentförmiges Wischfeld 182 überstreicht.

Die in Fig. 9 dargestellte Betriebsstellung des Führungshebels 156 ist dann gegeben, wenn die Antriebsvorrichtung 110 die pendelnde Antriebsbewegung für den Scheibenwischer 180 bewirken soll.

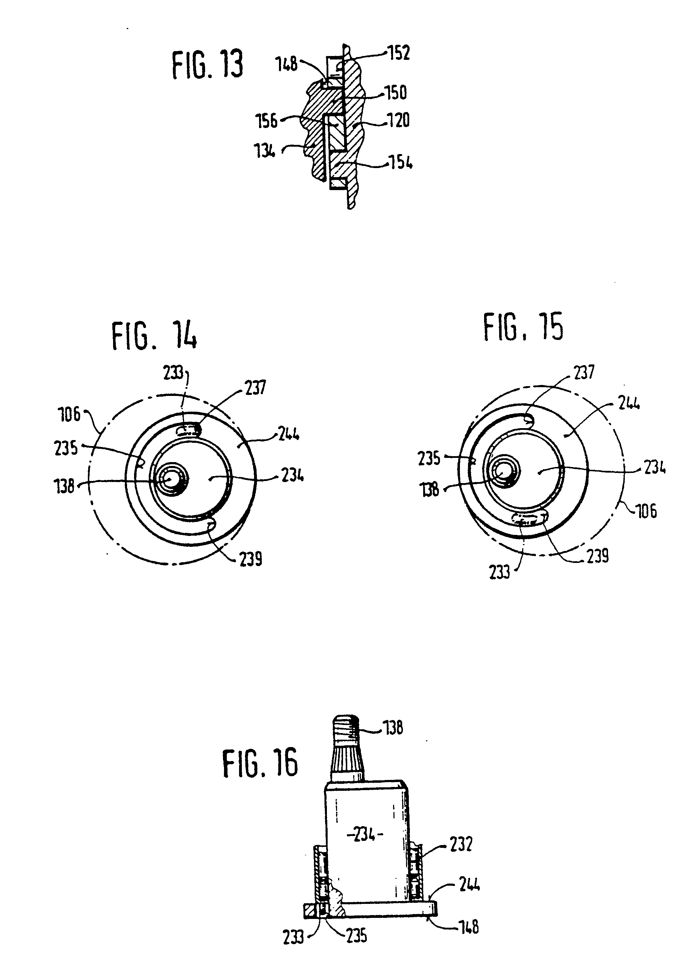

Im Betrieb der Wischvorrichtung treibt die vom nicht dargestellten Elektromotor betriebene Schneckenwelle 110 das Schneckenrad 104 und damit auch den rohrförmigen Ansatz 106. Das Schneckenrad dreht sich somit zusammen mit dem rohrförmigen Ansatz in der Lagerung 108 des Gehäuseteils 112. Die Drehrichtung des Schneckenrads 104 ist durch den Pfeil 184 in Fig. 9 angedeutet. Zusammen mit dem Schneckenrad dreht sich auch der Zylinder 134, weil das Freilauflager 132 in der Drehrichtung (Pfeil 184) gesperrt ist. Weiter dreht sich zusammen mit dem Schneckenrad 104 auch das scheibenförmige Bauteil 120, da dieses über die beiden Lagerbolzen 150, 154 und den Führungshebel 156 mit dem Zylinder 134 verbunden ist (Fig. 13). Dazu muß das Freilauflager 132 so eingebaut sein, daß es in Pfeilrichtung 184 eine freie Drehung des Lagerzapfens 122 zuläßt. Die beiden bezüglich ihrer Drehachsenrichtung gleich angeordneten Freilauflager 130 und 132 sind also in einander entgegengesetzten Richtungen frei drehbar. Wie insbesondere aus den Fig. 7 und 8 ersichtlich ist, befindet sich dabei der Zylinder 134 in einer Stellung, in welcher sich die Längsachse des Gewindebolzens 138 in Verlängerung der Achse des Lagerzapfens 122 befindet. Zusammen mit dem Gewindebolzen 138 dreht sich auch die an diesem befestigte Kurbel 172 (Fig. 8) in Richtung des Pfeiles 184. Diese Drehbewegung wird über die Schubstange 174 und die Schwinge 176 in eine Pendelbewegung umgewandelt, so daß der Scheibenwischer 180 das kreissegmentförmige Wischfeld 182 pendelnd überstreicht. Die Kurbel 172 bildet zusammen mit der Schubstange 174 und der Schwinge 176 ein Pendelgetriebe 175.

Während des Wischbetriebs läuft der Kraftfluß also von der Schneckenwelle 102 über das Schneckenrad 104, den rohrförmigen Ansatz 106, das gesperrte Freilauflager 132, den Zylinder 134 und den Gewindebolzen 138 zum Pendelgetriebe 175. Das scheibenförmige Bauteil 120 und der mit diesem verbundene Lagerzapfen 122 werden über Führungsmittel mitgenommen, welche durch den mit dem Zylinder 134 verbundenen Lagerbolzen 150, den Führungshebel 156 und den mit dem scheibenförmigen Bauteil 120 verbundenen Lagerbolzen 154 gebildet sind.

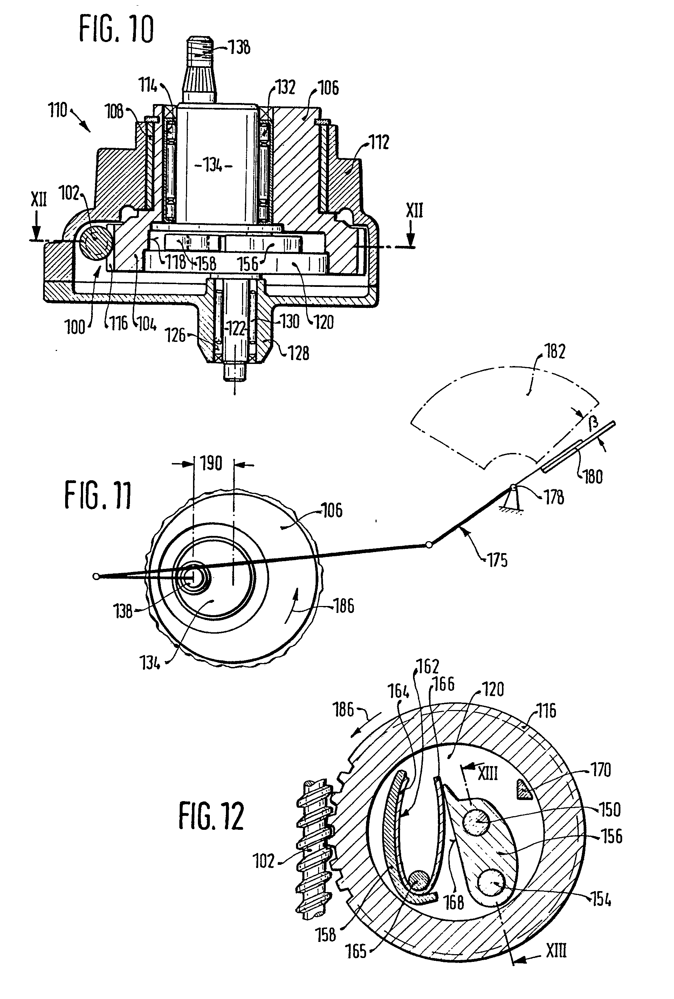

Wird nun die Wischvorrichtung stillgesetzt, wobei der Scheibenwischer 180 in eine gegenüber dem Wischfeld 182 versetzt angeordnete Parkstellung (Fig. 11) gebracht werden soll, wird der Antriebsmotor abgeschaltet, wobei der Scheibenwischer in die in Fig. 8 dargestellte Endlage läuft. In dieser Stellung wird über bekannte, schaltungstechnische Mittel die Drehrichtung des Antriebsmotors umgekehrt. Das Schneckenrad 104 dreht sich also nun entgegengesetzt, und zwar in einer Richtung, die durch den Pfeil 186 in Fig. 12 dargestellt ist. Bei dieser Drehrichtung öffnet der Freilauf 132 und der Freilauf 130 sperrt. Wenn sich nun das Schneckenrad 104 und somit auch der rohrförmige Ansatz 106 in Richtung des Pfeiles 186 drehen, gleichzeitig aber das scheibenförmige Bauteil 120 über den Lagerzapfen 122 durch das Freilauflager 130 festgehalten wird, erfolgt eine Relativbewegung zwischen dem Zylinder 134 und dem scheibenförmigen Bauteil 120. Durch diese Bewegung wird der Lagerbolzen 150 des Zylinders 134 gegenüber dem nun festgehaltenen Lagerbolzen 154 des scheibenförmigen Bauteils 120 auf einer Kurve 188 (Fig. 9) entgegen dem Uhrzeigersinn bewegt, wobei der Führungshebel 156 um den Lagerbolzen 154 entgegen der Kraft der Schenkelfeder 162 geschwenkt wird. Mit dieser Schwenkbewegung erfolgt auch ein Verdrehen des Zylinders 134 aus seiner in Fig. 7 gezeigten Betriebsstellung in die Stellung gemäß Fig. 11.

Vergleicht man nun die Fig. 8 und 11 miteinander, ist erkennbar, daß der Gewindebolzen 138 nun aus seiner in Flucht mit der Drehachse des Lagerzapfens 122 liegenden Betriebsstellung herausgewandert ist und zwar um ein Maß 190 (Fig. 11), das der doppelten Exzentrizität 140 des Gewindebolzens 138 zur Längsachse des Zylinders 134 entspricht. Mit dem Umkehren der Drehrichtung findet also eine Entkopplung des als Angriffselement für das Pendelgetriebe dienenden Gewindebolzens 138 von dem scheibenförmigen Bauteil 120 statt, welches durch den Freilauf 130 in seiner Drehrichtungsumkehrstellung festgehalten ist. Unter Entkopplung wird im vorliegenden Zusammenhang ein Aufheben der Wirkverbindung in Arbeitsrichtung zwischen dem Gewindebolzen 138 und dem Bauteil 120 verstanden. Die Führungsmittel, durch welche die Verschiebung des Gewindebolzens 138 um das Maß 190 bewirkt werden sind an dem scheibenförmigen Bauteil 120 befestigt. Durch die Verschiebung des Gewindebolzens 138 um das Maß 190 wird auch die Schubstange 174 so ersetzt, daß über die Schwinge 176 ein Zusatzschwenkwinkel $\beta$ auf den Scheibenwischer 180 ausgeübt wird. Der Scheibenwischer 180 liegt nun in seiner sogenannten Parkstellung (Fig. 11).

Die Überführung des Scheibenwischers 180 in seine Parkstellung wird also durch eine Relativbewegung zwischen dem scheibenförmigen Bauteil 120 und dem Schneckenrad 104 bzw. dem mit diesem verbundenen rohrförmigen Ansatz 106 bewirkt, weil die Führungsmittel 150, 154, 156 eine geführte Relativ-Drehbewegung zwischen dem Zylinder 134 und dem Schneckenrad 104 erzwingen.

Es zeigt sich, daß auch bei dieser Ausführung der Erfindung zum Überführen des Scheibenwischers in seine Parkstellung, das Bauteil 120 durch eine Sperreinrichtung 130 in der Drehrichtungsumkehrstellung festgehalten wird, wobei die Führungsmittel 150, 154, 156 an dem Bauteil 120 angeordnet bzw. mit diesem verbunden sind.

Wenn die Antriebsvorrichtung wieder den Betrieb aufnimmt, wird das Schneckenrad 104 bzw. der Ansatz 106 weiter in Richtung des Pfeils 186 gedreht. Dabei schwenkt der Führungshebel 156 wieder in seine in Fig. 9 gezeigte Position. In dieser in den Fig. 7 bis 9 gezeigten Stellung wird der Antriebsmotor umgepolt, so daß der beschriebene Wischbetrieb aufgenommen wird.

Ein sofortiger Anlauf in Richtung des Pfeiles 184 kann durch die Anordnung eines handelsüblichen, schaltbaren Freilauflagers 232 an Stelle des Freilauflagers 132 bewirkt werden. Ein derartiges Freilauflager hat an seiner einen Stirnfläche einen aus dieser ragenden Schalthebel 233, der über einen bestimmten Winkel in Umfangsrichtung des Freilauflagers bewegbar ist. In der einen Betriebsstellung des Schalthebels übt das Freilauflager Lagerfunktionen aus; d. h. es ist in beiden Richtungen frei drehbar. In der anderen Schaltstellung des Schalthebels 233 ist das Freilauflager in einer Drehrichtung gesperrt.

Der Einbau des Freilauflagers erfolgt so, daß der Schalthebel 233 zur Ringschulter 244 des Zylinders 234 weist. Dabei taucht er in einen sichelförmigen Durchbruch 235 (Fig. 14 bis 16) in der Ringschulter, welcher den Zylinder 234 um mehr als 180 Grad umschlingt. Die eine Endkante 237 des Durchbruchs 235 dient als Betätigungsschulter für den Schalthebel 233, die so angeordnet ist, daß sie das Freilauflager 232 in der dem Wischbetrieb zugeordneten Stellung gemäß Fig. 14 gesperrt hält. Somit entspricht die Wirkung des Freilauflagers 232 genau der des Freilauflagers 132 gemäß der zuvor beschriebenen Ausführung.

Soll der Scheibenwischer 180 aus seiner Endlage gemäß Fig. 8 in seine Parklage gemäß Fig. 11 überführt werden, wird der Antriebsmotor umgepolt, so daß das Schneckenrad 108 in Richtung des Pfeiles 186 dreht. Dabei gibt die Betätigungsschulter 237 des Durchbruchs 235 den Schalthebel 233 frei, so daß durch ein Federmechanismus im Freilauflager die Klemmfunktion aufgehoben wird. Somit ist die zuvor beschriebene Überführung des Scheibenwischers 180 in seine in Fig. 11 gezeigte Parklage möglich. Der Schalthebel 233 läuft dabei in dem sichelförmigen Durchbruch 235 in eine in Fig. 15 gezeigte Stellung, in welche er nach etwas mehr als 180 Grad mit Abstand von der anderen Endkante 239 des Durchbruchs 235 zum Stillstand kommt, weil der Antriebsmotor abgeschaltet wird.

Beim Wiederanlaufen des Antriebsmotors läuft dieser — bedingt durch eine schaltungstechnische Maßnahme — so an, daß sich das Schneckenrad 104 in Richtung des Pfeiles 184 dreht. Nun läuft der Schalthebel 233 in dem Durchbruch 235 bis zur Anlage an den Betätigungsschalter 237, wodurch ein Sperren des Freilauflagers bewirkt und der Wischbetrieb aufgenommen wird. Bis zum Schalten des Freilauflagers 232 läuft der Scheibenwischer 180 aus seiner Parklage (Fig. 11) in seine eine Endlage gemäß Fig. 8. Es wird also dabei der Zusatzschwenkwinkel $\beta$ zurückgelegt. Dabei sorgt — genau so wie bei der Anordnung gemäß den Fig. 7 bis 13 — die Schenkelfeder 162 für eine ordnungsgemäße Rückstellung des Führungshebels 156 aus seiner Betriebsstellung gemäß Fig. 12 in die Fig. 9 gezeigte Lage.

Es ist ersichtlich, daß diese Ausführung der Erfindung ein Anlaufen des Scheibenwischers 180 aus der Parklage mit direktem Übergang in den Wischbetrieb ermöglicht.

## Patentansprüche

1. Wischvorrichtung für Scheiben von Kraftfahrzeugen, mit einer vorzugsweise elektromotorischen, drehrichtungsumkehrbaren Antriebsvorrichtung (10), deren umlaufendes Abtriebselement (64) über ein Pendelgetriebe (66, 68) mit einer einen Wischer (74) tragenden Wischerwelle (70) wirkverbunden ist, wobei der Wischer während des über die eine Drehrichtung der Antriebsvorrichtung (10) bewirkten Wischbetriebs ein kreissegmentförmiges Wischfeld (80) überstreicht und nach Drehrichtungsumkehr ein auf einem umlaufend angetriebenen Getriebeelement (20) angeordnetes Angriffselement (64) des Pendelgetriebes mit Hilfe von Führungsmitteln (60) von seinem Umlaufzentrum radial (84) bewegt wird, wodurch der Wischer (74) in eine außerhalb des Wischfeldes (80) liegende Parklage ($\beta$) überführt wird, die Überführungsbewegung des Angriffselements durch dessen Abkopplung von einem mit diesem während des Wischbetriebs umlaufenden und mit diesem verbundenen, die Führungsmittel (60) aufweisenden Bauteils (28) eingeleitet wird und das Bauteil (28) durch eine Sperreinrichtung (24) in der Drehrichtungsumkehrstellung (82) festgehalten ist, dadurch gekennzeichnet, daß als Sperreinrichtung ein Freilauflager (24, 130) angeordnet ist.

2. Wischvorrichtung nach Anspruch 1, dadurch gekennzeichnet, daß das Freilauflager (24) auf einer gestellfesten Nabe (22) angeordnet und von einer mit dem Bauteil (28) verbundenen Hülse (26) umgeben ist.

3. Wischvorrichtung nach Anspruch 2, dadurch gekennzeichnet, daß die Nabe (22) als Lagerbuchse für das als Welle (16) ausgebildete Antriebselement der Antriebsvorrichtung (10) ausgebildet ist.

4. Wischvorrichtung nach Anspruch 3, dadurch gekennzeichnet, daß an der Abtriebswelle (16) eine Kurbel (20) befestigt ist, an der während des Wischbetriebs ein zu dem Bauteil (28) gehörender Mitnehmer (32) angreift.

5. Wischvorrichtung nach Anspruch 4, dadurch gekennzeichnet, daß der Mitnehmer ein vorzugsweise an das Bauteil (28) angeformter und abgebogener Lappen (32) ist, an dem eine in Umlaufrichtung (34) vorn liegende Fläche (21) der Kurbel (20) anschlägt.

6. Wischvorrichtung nach einem der Ansprüche 4 oder 5, dadurch gekennzeichnet, daß an dem freien Ende der Kurbel (20) ein Ende eines Armes (40) angelenkt ist, dessen anderes, mit einem als Gelenkhälfte (64) ausgebildeten Angriffselements eines Pendelgetriebes (66, 68) versehenes Ende (58) mit dem umlaufenden Führungsmitteln (42) zusammenwirkt.

7. Wischvorrichtung nach Anspruch 6, dadurch gekennzeichnet, daß die Führungsmittel (42) an einem vorzugsweise aus einem Kunststoff bestehenden und mit dem Bauteil (28) verbundenen Block (38) ausgebildet sind, wobei das andere Ende (58) des Armes (40) in einer passend ausgebildeten Ausnehmung (60) des Blocks (38) verschiebbar ist.

8. Wischvorrichtung nach Anspruch 7, dadurch gekennzeichnet, daß das im Block (38) geführte Ende (58) des Armes (40) wenigstens an den seitlich geführten Bereichen kreisförmig ausgebildet ist.

9. Wischvorrichtung nach einem der Ansprüche 4 bis 8, dadurch gekennzeichnet, daß die Kurbel (20) und das Bauteil (28) vorzugsweise im Bereich des Gelenks (44) zwischen dem Arm (40) und der Kurbel (20) miteinander verrastet sind.

10. Wischvorrichtung nach Anspruch 9, dadurch gekennzeichnet, daß die Rastmittel durch eine an der Kurbel (20) gehaltene, federbelastete Kugel (54) und eine im Bauteil (28) befindliche, der Kugel (54) zugeordnete Rastausnehmung (56) gebildet sind.

11. Wischvorrichtung nach Anspruch 10, dadurch gekennzeichnet, daß die auf die Kugel (54) einwirkende Feder (52) in einer Sackbohrung angeordnet ist, welche sich in einem die Kurbel (20) und den Arm (40) verbindenden Gelenkbolzen (44) befindet.

12. Wischvorrichtung nach Anspruch 1, bei der die Antriebsvorrichtung ein Untersetzungsgetriebe aufweist, dadurch gekennzeichnet, daß das drehbar gelagerte Bauteil (120) mit einem Getrieberad (104) zusammenarbeitet, welches mit dem Pendelgetriebe (175) wirkverbunden ist.

13. Wischvorrichtung nach Anspruch 12, dadurch gekennzeichnet, daß das Bauteil (120) durch das während des Wischbetriebs frei drehbare, als Sperreinrichtung wirkende Freilauflager (130) gelagert ist.

14. Wischvorrichtung nach Anspruch 13, dadurch gekennzeichnet, daß das Freilauflager (130) einen Lagerzapfen (122) des vorzugsweise scheibenförmigen Bauteils (120) aufnimmt und in einer Lagerung (128) eines zur Antriebsvorrichtung (110) gehörenden Gehäuseteils angeordnet ist.

15. Wischvorrichtung nach einem der Ansprüche 12 bis 14, dadurch gekennzeichnet, daß das scheibenförmige Bauteil (120) konzentrisch zu dem Getrieberad (104) angeordnet ist.

16. Wischvorrichtung nach einem der Ansprüche 14 oder 15, dadurch gekennzeichnet, daß das Getrieberad (104) auf seiner von dem scheibenförmigen Ansatz (106) aufweist, der in einem zur Antriebsvorrichtung gehörenden Gehäuseteil (112) gelagert ist.

17. Wischvorrichtung nach Anspruch 16, dadurch gekennzeichnet, daß die Bohrung im Ansatz (106) des Getrieberads (104) in eine Vertiefung (118) des Getrieberads (104) mündet und exzentrisch zu dessen Verzahnung (116) angeordnet ist.

18. Wischvorrichtung nach Anspruch 17, dadurch gekennzeichnet, daß in dem Ansatz (106) ein Zylinder (134) gelagert ist, an dessen von dem scheibenförmigen Bauteil (120) abgewandten Stirnfläche (136) ein vorzugsweise als Gewindebolzen (138) ausgebildetes Angriffselement für das Pendelgetriebe (175) sitzt.

19. Wischvorrichtung nach Anspruch 18, dadurch gekennzeichnet, daß der Gewindebolzen (138) zur Achse des Zylinders (134) exzentrisch angeordnet ist.

20. Wischvorrichtung nach Anspruch 19, dadurch gekennzeichnet, daß die Exzentrizität (140) des Gewindebolzens (138) der Exzentrizität (142) der Lagerbohrung (114) für den Zylinder (134) in dem rohrförmigen Ansatz (106) entspricht.

21. Wischvorrichtung nach einem der Ansprüche 18 bis 20, dadurch gekennzeichnet, daß in der Lagerbohrung (114) für den Zylinder (134) ein zweites Freilauflager (132) angeordnet ist, welches den Zylinder (134) aufnimmt.

22. Wischvorrichtung nach Anspruch 21, dadurch gekennzeichnet, daß die beiden Freilauflager (130, 132) parallele Achsen haben und ineinander entgegengesetzten Richtungen frei drehbar sind.

23. Wischvorrichtung nach einem der Ansprüche 18 bis 22, dadurch gekennzeichnet, daß sowohl an der dem Zylinder (134) zugewandten Fläche (152) des scheibenförmigen Bauteils (120), als auch an der dieser zugewandten Stirnfläche (148) des Zylinders (134) je ein Lagerbolzen (150 bzw. 154) angeordnet ist, daß jeder Lagerbolzen zur Drehachse seines Trägers (134 bzw. 120) exzentrisch sitzt und daß die Lagerbolzen (150 bzw. 154) durch einen Führungshebel (156) gelenkig miteinander verbunden sind.

24. Wischvorrichtung nach Anspruch 23, dadurch gekennzeichnet, daß an der dem Zylinder (134) zugewandten Fläche (152) des scheibenförmigen Bauteils (120) ein Vorsprung (158) angeordnet ist, der eine Stützschulter (160) für eine vorgespannte Schenkelfeder (162) bildet, welche den Führungshebel (156) in eine erste Betriebsstellung zu drücken sucht.

25. Wischvorrichtung nach Anspruch 23, dadurch gekennzeichnet, daß der Führungshebel (156) entgegen der Kraft der vorzugsweise als Schenkelfeder ausgebildeten Rückstellfeder (162) in eine zweite Betriebsstellung schwenkbar ist.

26. Wischvorrichtung nach Anspruch 25, dadurch gekennzeichnet, daß die erste Betriebsstellung des Führungshebels (156) den Wischbetrieb der Wischvorrichtung gestattet und die zweite Betriebsstellung eine Überführung des Scheibenwischers (180) in seine Parklage erzwingt.

27. Wischvorrichtung nach einem der Ansprüche 18 bis 26, dadurch gekennzeichnet, daß der Zylinder (134) an seinem von dem Gewindebolzen (138) abgewandten Ende mit einer Ringschulter (144) versehen ist, die eine Gegenschulter (146) des rohrförmigen Ansatzes (106) zugeordnet ist.

28. Wischvorrichtung nach einem der Ansprüche 21 bis 27, dadurch gekennzeichnet, daß das zweite Freilauflager (232) mit einer mechanisch betätigbaren Schalteinrichtung versehen ist.

29. Wischvorrichtung nach Anspruch 28, dadurch gekennzeichnet, daß die Schalteinrichtung durch einen stirnseitig aus dem Freilauflager (232) ragenden Schalthebel (233) betätigbar ist.

30. Wischvorrichtung nach Anspruch 29, dadurch gekennzeichnet, daß der Schalthebel (233) mit wenigstens einer Betätigungsschulter (237) zusammenarbeitet.

31. Wischvorrichtung nach Anspruch 30, dadurch gekennzeichnet, daß der Schalthebel (233) in einen in einer Ringschulter (244) des Zylinders (234) angeordneten sichelförmigen Durchbruch (235) greift, dessen eine Endkante (237) eine Betätigungsschulter für den Schalthebel (233) bildet.

## Claims

1. Wiper device for screens of motor vehicles, with a preferably electromotive drive device (10) of reversible direction of rotation, the rotating output element (64) of which is connected operatively via a pendulum gear (66, 68) to a wiper shaft (70) carrying a wiper (74), the wiper covering a wiping zone (80) in the form of a segment of a circle during the wiping action caused by means of one direction of rotation of the drive device (10), and after a reversal of the direction of rotation a pendulum-gear engagement element (64) arranged on a gear element (20) driven to rotate being moved radially (84) from its centre of rotation with the aid of guide means (60), as a result of which the wiper (74) is transferred into a parking position (β) located outside the wiping zone (80), the transfer movement of the engagement element is initiated when it is uncoupled from a component (28) which rotates together with the latter during the wiping action and is connected to it and which possesses the guide means (60), and the component (28) is retained in the position of reversed direction of rotation (82) by a blocking device (24), characterized in that a free-wheel bearing (243, 130) is provided as a blocking device.

2. Wiper device according to claim 1, characterized in that the free-wheel bearing (24) is arranged on a hub (22) fixed to the frame and is surrounded by a sleeve (26) connected to the component (28).

3. Wiper device according to claim 2, characterized in that the hub (22) is designed as a bearing bush for the drive element of the drive device (10), the said drive element being designed as a shaft (16).

4. Wiper device according to claim 3, characterized in that fastened to the output shaft (16) is a crank (20), on which an engagement means (32) belonging to the component (28) engages during the wiping action.

5. Wiper device according to claim 4, characterized in that the engagement means is a tab (32) which is preferably formed on the component (28) and bent and against which butts a surface (21) of the crank (20) located at the front in the direction of rotation (34).

6. Wiper device according to one of claims 4 or 5, characterized in that articulated on the free end of the crank (20) is one end of an arm (40), of which the other end (58) provided with an engagement element of a pendulum gear (66, 68), the said engagement element being designed as a joint half (64), interacts with the rotating guide means (42).

7. Wiper device according to claim 6, characterized in that the guide means (42) are formed on a block (38) preferably consisting of a plastic and connected to the component (28), the other end (58) of the arm (40) being displaceable in a matching recess (60) in the block (38).

8. Wiper device according to claim 7, characterized in that the end (58) of the arm (40) guided in the block (38) is circular at least in the regions guided laterally.

9. Wiper device according to one of claims 4 to 8, characterized in that the crank (20) and component (28) are interlocked preferably in the region of the joint (44) between the arm (40) and the crank (20).

10. Wiper device according to claim 9, characterized in that the locking means are formed by a spring-loaded ball (54) held on the crank (20) and by a locking recess (56) located in the component (28) and assigned to the ball (54).

11. Wiper device according to claim 10, characterized in that the spring (52) acting on the ball (54) is arranged in a blind bore which is located in a joint pin (44) connecting the crank (20) and the arm (40).

12. Wiper device according to claim 1, in which the drive device has a reduction gear, characterized in that the rotatably mounted component (120) interacts with a gear wheel (104) which is connected oper-atively to the pendulum gear (175).

13. Wiper device according to claim 12, characterized in that the component (120) is supported by the free-wheel bearing (130) which is freely rotatable during the wiping action and which acts as a blocking device.

14. Wiper device according to claim 13, characterized in that the free-wheel bearing (130) receives a bearing journal (122) of the preferably disc-shaped component (120) and is arranged in a mounting (128) of a housing part belonging to the drive device (110).

15. Wiper device according to one of claims 12 to 14, characterized in that the disc-shaped component (120) is arranged concentrically relative to the gear wheel (104).

16. Wiper device according to one of claims 14 or 15, characterized in that the gear wheel (104) has a disc-shaped extension (106) which is mounted in a housing part (112) belonging to the drive device.

17. Wiper device according to claim 16, characterized in that the bore in the extension (106) of the gear wheel (104) opens into a cavity (118) of the gear wheel (104) and is arranged eccentrically relative to the toothing (116) of the latter.

18. Wiper device according to claim 17, characterized in that a cylinder (134) is mounted in the extension (106), an engagement element preferably designed as a threaded bolt (138) and intended for the pendulum gear (175) resting on the end face (136) of the cylinder (134) which faces away from the disc-shaped component (120).

19. Wiper device according to claim 18, characterized in that the threaded bolt (138) is arranged eccentrically relative to the axis of the cylinder (134).

20. Wiper device according to claim 19, characterized in that the eccentricity (140) of the threaded bolt (138) corresponds to the eccentricity (142) of the bearing bore (114) for the cylinder (134) in the tubular extension (106).

21. Wiper device according to one of claims 18 to 20, characterized in that a second free-wheel bearing (132) which receives the cylinder (134) is located in the bearing bore (114) for the cylinder (134).

22. Wiper device according to claim 21, characterized in that the two free-wheel bearings (130, 132) have parallel axes and are freely rotatable in opposite directions to one another.

23. Wiper device according to one of claims 18 to 22, characterized in that a bearing bolt (150 and 154) is arranged both on the surface (152) of the disc-shaped component (120) facing the cylinder (134) and on the end face (148) of the cylinder (134) facing the surface (152), in that each bearing bolt is arranged eccentrically relative to the axis of rotation of its carrier (134 and 120), and in that the bearing bolts (150 and 154) are articulated to one another by means of a guide lever (156).

24. Wiper device according to claim 23, characterized in that on the surface (152) of the disc-shaped component (120) facing the cylinder (134) there is a projection (158) forming a supporting shoulder (160) for a prestressed leg spring (162) which endeavours to press the guide lever (156) into a first operating position.

25. Wiper device according to claim 23, characterized in that the guide lever (156) is pivotable into a second operating position counter to the force of the restoring spring (162) preferably designed as a leg spring.

26. Wiper device according to claim 25, characterized in that the first operating position of the guide lever (156) allows the wiping action of the wiper device, and the second operating position forces the screen wiper (180) to be transferred into its parking position.

27. Wiper device according to one of claims 18 to 26, characterized in that the cylinder (134) is provided, at its end facing away from the threaded bolt (138), with an annular shoulder (144) which is assigned to a counter-shoulder (146) of the tubular extension (106).

28. Wiper device according to one of claims 21 to 27, characterized in that the second free-wheel bearing (232) is provided with a switching device which can be actived mechanically.

29. Wiper device according to claim 28, characterized in that the switching device can be actuated by a switching lever (233) projecting from the free-wheel bearing (232) on its end face.

30. Wiper device according to claim 29, characterized in that the switching lever (233) interacts with a least one actuating shoulder (237).

31. Wiper device according to claim 30, characterized in that the switching lever (233) engages into a sickle-shaped perforation (235) which is arranged in an annular shoulder (244) of the cylinder (234) and one end edge (237) of which forms an actuating shoulder for the switching lever (233).

## Revendications

1. Dispositif d'essuie-glace pour véhicules à moteur comportant un dispositif d'entraînement (10), à sens de rotation réversible, de préférence à moteur électrique, dont l'élément de sortie (64) tournant est relié fonctionnellement par une transmission pendulaire (66, 68) à un axe de balai (70) portant un balai (74), le balai parcourant un champ de balayage (80) en forme de segment de cercle au cours du fonctionnement de balayage correspondant à un sens de rotation du dispositif d'entraînement (10), et après inversion du sens de rotation, un élément de prise (64) de la transmission pendulaire, prévu sur un élément de transmission (20) entraîné en continu, est déplacé radialement par rapport à son centre de rotation à l'aide de moyens de guidage (60), le balai (74) passant dans une position de repos (β) située en dehors du champ de balayage (80), le mouvement de transfert de l'élément de prise étant induit par son débrayage par rapport à un composant (28) comprenant les moyens de guidage (60) et tournant avec celui-ci pendant le balayage et est relié à celui-ci, et le composant (28) est maintenu fixe dans la position d'inversion de sens de rotation (82) par un dispositif de blocage (24), caractérisé en ce que le dispositif de blocage est constitué par un palier de roue libre (232, 130).

2. Dispositif d'essuie-glace selon la revendication 1, caractérisé en ce que le palier de roue libre (24) est monté sur un moyeu (22) solidaire du châssis et est entouré par une douille (26) reliée au composant (28).

3. Dispositif d'essuie-glace selon la revendication 2, caractérisé en ce que le moyeu (22) est réalisé comme douille de palier pour l'élément d'entraînement du dispositif d'entraînement (10) réalisé comme axe (16).

4. Dispositif d'essui-glace selon la revendication 3, caractérisé en ce qu'une manivelle (20) est fixée à l'axe de sortie (16), manivelle qui est attaquée pendant le fonctionnement de balayage par un organe d'entraînement (32) appartenant au composant (28).

5. Dispositif d'essuie-glace selon la revendication 4, caractérisé en ce que l'organe d'entraînement est de préférence une patte (32) formée sur le composant (28) et recourbée par rapport à celui-ci, patte contre laquelle bute une surface (21) située en avant de la manivelle (20), pour le sens de rotation (34).

6. Dispositif d'essuie-glace selon l'une des revendications 4 ou 5, caractérisé en ce qu'une extrémité d'un bras (40) est reliée de façon articulée à l'extrémité libre de la manivelle (20), bras dont l'autre extrémité (58) munie d'un élément d'attaque d'une transmission pendulaire (66, 68), réalisée comme moitié d'articulation (64), coopère avec les moyens de guidage (42) tournants.

7. Dispositif d'essuie-glace selon la revendication 6, caractérisé en ce que les moyens de guidage (42) sont constitués par un bloc (38) de préférence en matière synthétique et qui est relié au composant (28), l'autre extrémité (58) du bras (40) étant coulissante dans une cavité (60) du bloc (38), cette cavité ayant une forme adaptée.

8. Dispositif d'essuie-glace selon la revendication 7, caractérisé en ce que l'extrémité (58) du bras (40) guidé dans le bloc (38) est réalisée au moins en forme d'arc de cercle dans ses zones guidées latéralement.

9. Dispositif d'essui-glace selon l'une quelconque des revendications 4 à 8, caractérisé en ce que la manivelle (20) et le composant (28) sont accrochés entre eux de préférence au niveau de l'articulation (44) entre le bras (40) et la manivelle (20).

10. Dispositif dessui-glace selon la revendication 9, caractérisé en ce que les moyens d'encliquetage sont constitués par une bille soumise à l'action d'un ressort et maintenue sur la manivelle (20) et une cavité d'encliquetage (56) associée à la bille (54) et se trouvant dans le composant (28).

11. Dispositif d'essuie-glace selon la revendication 10, caractérisé en ce que le ressort (52) agissant sur la bille (54) est logé dans un trou borgne qui se trouve dans un goujon articulé (44) reliant la manivelle (20) et le bras (40).

12. Dispositif d'essuie-glace selon la revendication 1 dans lequel le dispositif d'entraînement comporte une transmission réductrice, caractérisé en ce que le composant (120) monté à rotation coopère avec une roue de transmission (104) qui est reliée de façon fonctionnelle à la transmission pendulaire (175).

13. Dispositif d'essui-glace selon la revendication 12, caractérisé en ce que le composant (120) est monté dans le palier de roue libre (130) fonctionnant comme dispositif de blocage, tournant librement pendant le fonctionnement du dispositif d'essuie-glace.

14. Dispositif d'essuie-glace selon la revendication 13, caractérisé en ce que le palier de roue libre (130) reçoit un goujon de palier (122) du composant (120) de préférence en forme de disque et est prévu dans un palier (128) d'une partie de boîtier appartenant au dispositif d'entraînement (110).

15. Dispositif d'essuie-glace selon l'une des revendications 12 à 14, caractérisé en ce que le composant (120) en forme de disque est prévu concentrique au pignon de transmission (104).

16. Dispositif d'essuie-glace selon l'une des revendications 14 ou 15, caractérisé en ce que le pignon de transmission (104) comporte un prolongement (106) en forme de disque qui est logé dans une partie de boîtier (112) appartenant au dispositif d'entraînement.

17. Dispositif d'essuie-glace selon la revendication 16, caractérisé en ce que le perçage de l'épaulement (106) du pignon de transmission (104) d'ébouche dans une cavité (118) du pignon de transmission (104) et est disposé de façon excentrée par rapport à sa denture (116).

18. Dispositif d'essuie-glace selon la revendication 17, caractérisé en ce qu'un cylindre (134) est logé dans le prolongement (106), cylindrique dont la surface frontale (136) opposée au composant (120) en forme de disque porte un élément de prise réalisé de préférence comme goujon fileté (138) pour la transmission pendulaire (175).

19. Dispositif d'essuie-glace selon la revendication 18, caractérisé en ce que le goujon fileté (138) est prévu de façon excentrée par rapport à l'axe du cylindre (134).

20. Dispositif d'essuie-glace selon la revendication 19, caractérisé en ce que l'excentricité (140) du goujon fileté (138) correspond à l'excentricité (142) du perçage de palier (114) pour le cylindre (134) dans le prolongement tubulaire (106).

21. Dispositif d'essuie-glace selon l'une des revendications 18 à 20, caractérisé en ce qu'un second palier de roue libre (132) est prévu dans le perçage de palier (114) pour le cylindre (134), second palier qui reçoit le cylindre (134).

22. Dispositif d'essuie-glace selon la revendication 21, caractérisé en ce que les deux paliers de roue libre (130, 132) ont des axes parallèles et peuvent tourner librement dans des directions opposées entre elles.

23. Dispositif d'essuie-glace selon l'une des revendications 18 à 22, caractérisé en ce qu'il est prévu un goujon de palier (150 ou 154) respectif à la fois sur la surface (152) tournée vers le cylindre (134) du composant (120) en forme de disque et sur la surface frontale (148) du cylindre (134) tournée vers la surface précédente, en ce que chaque goujon de palier est excentré par rapport à l'axe de rotation de son support (134 ou 120) et en ce que les goujons de palier (150 ou 154) sont reliés entre eux de façon articulée par un levier de guidage (156).

24. Dispositif d'essuie-glace selon la revendication 23, caractérisé en ce que sur les surfaces (152) du composant (120) en forme de disque, surface tournée vers le cylindre (134), il est prévu une partie en saillie (158) qui forme un épaulement d'appui (160) pour un ressort à branches précontraintes (162) qui tend à pousser le levier de guidage (156) dans une première position de fonctionnement.

25. Dispositif d'essuie-glace selon la revendication 23, caractérisé en ce que le levier de guidage (156) est susceptible d'être basculé contre la force du ressort de rappel (162) réalisé de préférence sous la forme d'un ressort à branches, vers une seconde position de fonctionnement.

26. Dispositif d'essuie-glace selon la revendication 25, caractérisé en ce que la première position de fonctionnement du levier de guidage (156) permet au dispositif d'essuie-glace de fonctionner en essuyant et la seconde position de fonctionnement oblige un passage du balai d'essuie-glace (180) dans sa position de repos.

27. Dispositif d'essuie-glace selon l'une des revendications 18 à 26, caractérisé en ce que le cylindre (134) comporte un épaulement annulaire (144) à son extrémité opposée au goujon fileté (138), épaulement auquel est associé un épaulement antagoniste (146) du prolongement tubulaire (106).

28. Dispositif d'essuie-glace selon l'une des revendications 21 à 27, caractérisé en ce que le second palier de roue libre (232) est muni d'un dispositif de commutation à mise en oeuvre mécanique.

29. Dispositif d'essuie-glace selon la revendication 28, caractérisé en ce que le dispositif de commutation est susceptible d'être mis en oeuvre par un levier de commutation (233) qui est en saillie de la face frontale du palier de roue libre (132).

30. Dispositif d'essuie-glace selon la revendication 29, caractérisé en ce que le levier de commutation (233) coopère avec au moins un épaulement de manoeuvre (137).

31. Dispositif d'essuie-glace selon la revendication 30, caractérisé en ce que le levier de commutation (233) pénètre dans un passage (235) en forme de faucille, prévu dans un épaulement annulaire (244) du cylindre (234), passage dont une arête d'extrémité (237) forme un épaulement de manoeuvre du levier de commutation (233).

# FIG.1

# FIG.2

0 082 298

FIG.3

21 32

28

20

FIG.4

28 38

42
62
64
60

42

46 52 48 50 40

FIG.5

64

58

54 56 44 28
20
24
18
14

26
22
16

10 12

24

FIG.6

15

FIG. 7

FIG. 8

FIG. 9

0 082 298

FIG. 10

FIG. 11

FIG. 12

19

FIG. 13

148
152
150
156
120
134
154

FIG. 14

233
237
106
235
244
138
234
239

FIG. 15

237
244
235
234
138
106
239
233

FIG. 16

138
234
232
244
233
235
148